Europäisches Patentamt

European Patent Office

Office européen des brevets

(19)

(11) Veröffentlichungsnummer: **0 216 871**
**B1**

(12) EUROPÄISCHE PATENTSCHRIFT

(45) Veröffentlichungstag der Patentschrift: **19.09.90**

(51) Int. Cl.⁵: **B 01 D 19/00**

(21) Anmeldenummer: **86902268.1**

(22) Anmeldetag: **09.04.86**

(86) Internationale Anmeldenummer:
**PCT/AT86/00028**

(87) Internationale Veröffentlichungsnummer:
**WO 86/06001 23.10.86 Gazette 86/23**

(54) EINRICHTUNG ZUM KONTINUIERLICHEN AUSDAMPFEN BZW. AUSGASEN VON FLÜSSIGKEITEN, WELCHE ZUR SCHAUMBILDUNG NEIGEN.

(30) Priorität: **09.04.85 AT 1064/85**

(43) Veröffentlichungstag der Anmeldung:
**08.04.87 Patentblatt 87/15**

(45) Bekanntmachung des Hinweises auf die
Patenterteilung:
**19.09.90 Patentblatt 90/38**

(84) Benannte Vertragsstaaten:
**BE CH DE FR GB IT LI LU NL SE**

(56) Entgegenhaltungen:
FR-A-2 134 679
FR-A-2 264 584
US-A-4 211 647

(73) Patentinhaber: **VOEST-ALPINE
Aktiengesellschaft
Muldenstrasse 5
A-4020 Linz (AT)**

(72) Erfinder: **CVITAS, Vilim
Wöberweg 8
A-4060 Leonding (AT)**
Erfinder: **FALTEJSEK, Karl
Lüfteneggerstrasse 6
A-4020 Linz (AT)**
Erfinder: **KLINAR, Gottfried
Alpenstrasse 33
A-8707 Leoben (AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien (AT)**

## Beschreibung

Die Erfindung bezieht sich auf eine Einrichtung zum kontinuierlichen Ausdampfen bzw. Ausgasen von Flüssigkeiten, welche zur Schaumbildung neigen, insbesondere von Suspensionen oder in biologischer Umsetzung befindlichen Substraten.

Aus der EP—A—35 705 ist bereits ein mechanischer Schaumzerstörer bekanntgeworden, bei welchem ein sich drehender Ansaugstutzen für den Schaum mit mindestens drei Kanälen ausgebildet ist, die vom Ansaugstutzen ausgehend unter vorbestimmten Winkeln radial nach außen abgehen. Es ist weiters bereits bekannt, neben der mechanischen Schaumzerstörung Verfahren anzuwenden, bei welchen der Schaum erhitzt wird. Hohe Temperaturen können aber insbesondere bei mikrobiologischen Verfahren nur mit äußerster Vorsicht angewandt werden, da die Gefahr besteht, daß die produkte bzw. die Mikroorganismen Schaden erleiden.

Im Zusammenhang mit der mechanischen Schaumzerstörung sind bereits Einrichtungen bekanntgeworden, welche den Schaum einer hohen Scherbeanspruchung und/oder einer Fliehkraft aussetzen. In diesem Zusammenhang sind Injektor- bzw. Ejektordüsen, die mit Dampf- oder Druckluft betrieben wurden, bekanntgeworden. Weiters sind Zentrifugen und Zyklone, welche den Schaum einer Fliehkraft aussetzen, bereits bekannt.

Aus der US—A—4 211 647 ist ein Verfahren zur Behandlung von Abwässern bekanntgeworden, wobei in einem quadratischen Querschnitt aufweisenden Gehäuse auf eine drehbare Welle normal stehende Scheiben in die zu behandelnde Flüssigkeit teilweise eintauchen, um derart eine Belüftung der zu behandelnden Flüssigkeit zu ergeben. Aus der FR—A—2 264 584 ist eine Einrichtung zum Belüften von Abwässern bekanntgeworden, bei welcher an einer drehbaren Welle Scheiben schwenkbar angeordnet sind und die Welle in ein Becken mit zu behandelnder Flüssigkeit eintaucht.

Die Erfindung zielt nun darauf ab, einen mechanischen Schaumzerstörer der eingangs genannten Art zu schaffen, bei welchem die mechanische Belastung möglichst gering gehalten wird und beispielsweise eine Flockung ohne Zerstörung bzw. Einflußnahme auf die gebildeten Flocken und im Falle organischer Materialien bzw. Bakterien ohne Schädigung derselben eine einfache Verhinderung der Schaumbildung bzw. Entgasung möglich ist. Zur Lösung dieser Aufgabe besteht die Erfindung im wesentlichen aus einer Einrichtung zum kontinuierlichen Ausdampfen bzw. Ausgasen von Flüssigkeiten, welche zur Schaumbildung neigen, insbesondere von Suspensionen oder in biologischer Umsetzung befindlichen Substraten, bei welcher ein Rotor um eine im wesentlichen horizontale Achse rotierbar gelagert ist, mit dem Rotor in den Flüssigkeitsspiegel eines offenen Beckens eintauchende Taumelscheiben drehfest verbunden sind, die Neigung der Taumelscheiben in Richtung der Drehachse in wenigstens einem Axialschnitt abwechselnd größer und kleiner als 90° zur Drehachse ist, und der Abstand des Umfanges der Taumelscheiben vom Boden des Beckens so gewählt ist, daß ein Drosselquerschnitt zwischen den Taumelscheiben und dem Boden des Beckens verbleibt. Dadurch, daß um eine im wesentlichen horizontale Achse drehbar angeordnete Taumelscheiben in den Flüssigkeitsspiegel eintauchen, wird erreicht, daß die Oberfläche der Taumelscheiben unterhalb des Flüssigkeitsspiegels einen gewissenen Schereffekt ausübt. Durch Wahl eines geeigneten, einen Drosselquerschnitt ausbildenden Abstandes zwischen den Taumelscheiben und dem Boden des Beckens kann auch eine Art peristaltischer Bewegung erzielt werden, bei welcher der Flüssigkeitsspiegel in Bereichen, in welchen benachbarte Taumelscheiben nach oben hin divergieren, ansteigt und in Bereichen, in welchen die benachbarten Taumelscheiben nach unten zu divergieren, absinkt. Da diese Bereiche auf Grund der Drehung der Taumelscheiben um die gemeinsame Achse räumlich nicht gleich bleiben, ergibt sich ein Ansteigen und Absinken des Flüssigkeitsspiegels, wodurch sich ein guter Mischeffekt ergibt und die Koagulation von Feststoffen und Gasen gefördert wird. Beim Entgasen ergibt sich hiebei eine vollständige Unterdrückung einer Schaumbildung, womit die erfindungsgemäße Einrichtung besonders vorteilhaft bei einer Faulung, Gärung, insbesondere einer Gärung unter Anwendung von Unterdruck, oder aber auch bei Flockungen eingesetzt werden kann.

Die Flüssigkeit kann hiebei in einer Rinne oder einem Becken gefördert werden, wobei vorzugsweise die Flüssigkeit in Achsrichtung der Drehachse zu strömender Bewegung unter Verwendung einer Pumpe antreibbar ist. Die Taumelscheiben selbst haben keine Förderwirkung in Achsrichtung ihrer Rotationsachse und es ist daher ein zusätzlicher Antrieb für die Strömung der Flüssigkeit erforderlich, wobei bei schräger Anordnung der Bodenfläche für den Transport des flüssigen Mediums die Schwerkraft ausgenutzt werden kann.

In bevorzugter Weiterbildung der Einrichtung wird die Ausgestaltung so getroffen, daß in Achsrichtung der Welle abwechselnd entgegengesetzt zueinander geneigte Taumelscheiben angeordnet sind, deren Neigung in einer gemeinsamen Axialebene entgegengesetzt gleich ist. Die Maßnahme, die Neigung der Taumelscheiben in einer gemeinsamen Axialebene entgegengesetzt gleich zu wählen, führt hiebei zu einer gleichmäßigen mechanischen Belastung über die gesamte Länge der die Taumelscheiben tragenden Drehachse. Auf Grund der oben erwähnten quasiperistaltischen Bewegung erfolgt in Höhenrichtung des Flüssigkeitsspiegels durch Anheben und Absenken des Flüssigkeitsspiegels stets eine gegen die Oberfläche des Flüssigkeitsspiegels gerichtete Strömung, wobei sich auf Grund der Schrägstellung und im Zuge der Umdrehung der Taumelscheiben um die gemeinsame Achse gleichzeitig eine starke Querströmung ergibt. Beide dieser Strömungen wechseln während der Umdrehung der Taumelscheiben stets ihre Richtung und durch Wahl einer entsprechenden Drehzahl läßt sich eine laminare Strömung erzielen.

Um vorgegebene Aufenthaltszeiten in bestimmten Bereichen der Einrichtung sicherzustellen, ist es zweckmäßig Einbauten vorzunehmen, welche die Strömung vorübergehend auf definierte enge Querschnitte begrenzt. Zu diesem Zweck ist die Ausführung vorzugsweise so getroffen, daß das Becken in Achsrichtung der Drehachse durch wenigstens eine Trennwand unterteilt ist, wobei die Ebene der Trennwände von der Drehachse durchsetzt ist, daß der Abstand benachbarter Trennwände größer ist als der größte Abstand der Normalprojektion benachbarter drehbarer Scheiben und daß die Trennwände unterhalb des Flüssigkeitsspiegels, vorzugsweise nahe dem Grund des Beckens, Durchbrechungen, insbesondere Drosselquerschnitte, aufweisen.

Ein derartiges Becken erlaubt es in einfacher Weise, die Behandlungszeit durch geregelte Zufuhr und Abfuhr des flüssigen Mediums einzustellen. Die Scheiben können hiebei, wie es einer bevorzugten Ausführungsform entspricht, im wesentlichen kreisförmigen und vorzugsweise elliptischen Umriß aufweisen, wobei vor allen Dingen bei Wahl eines elliptischen Umrisses sichergestellt wird, daß zwischen durch Scheiben getrennten Abschnitten stets ein im wesentlichen gleichbleibender Durchtrittsquerschnitt verbleibt.

Für die Anwendung unterschiedlicher Druckbedingungen und unterschiedlicher Zusammensetzungen der Gasphase ist in vorteilhafter Weise das Becken über Schleusen, Ventile oder Drosseln mit dem Zulauf und dem Ablauf der flüssigen Phase verbunden.

Insbesondere bei einer Ausbildung, bei welcher durch Einbauten, wie beispielsweise Trennwände, Teilbereiche des Beckens abgetrennt wurden, ist es besonders vorteilhaft, die durch Trennwände abgeteilten Teilbereiche des Beckens mit gesonderten Anschlüssen für Flüssigkeitszufuhr und/oder -abfuhr auszustatten. Die Trennwände tauchen hiebei in den Flüssigkeitsspiegel ein und erlauben eine Trennung des Raumes benachbarter Teilbereiche, wodurch unterschiedliche Bedingungen in axialer Richtung der Einrichtung gewählt werden können. Die Teilbereiche können durch entsprechende Durchbrechungen in den Trennwänden kommunizierend ausgebildet werden, wobei eine Strömung der flüssigen Phase in axialer Richtung erzielt werden kann. Durch Wahl des axialen Abstandes der Durchbrechungen in den drehbaren Scheiben und/oder den Trennwänden läßt sich ein hydraulisches Gefälle für den Transport der flüssigen Phase vorgeben und durch Wahl der Verweilzeit in verschiedenen Teilbereichen des Beckens das Entgasungsverhalten verbessern.

Die Erfindung wird nachfolgend anhand von in der Zeichnung dargestellten Ausführungsbeispielen näher erläutert. In dieser zeigen

Fig. 1 eine Ansicht in Richtung der Achse einer in einer Rinne angeordneten erfindungsgemäßen Einrichtung;

Fig. 2 einen Schnitt nach der Linie II—II der Fig. 1;

Fig. 3 eine perspektivische Ansicht von aufeinanderfolgenden Trennwänden zwischen einzelnen Teilbereichen des Beckens;

Fig.4 eine Seitenansicht zur Verdeutlichung der Strömungsverhältnisse und

Fig. 5 eine Draufsicht auf die Ausbildung nach Fig. 4 zur Erläuterung der Querströmung.

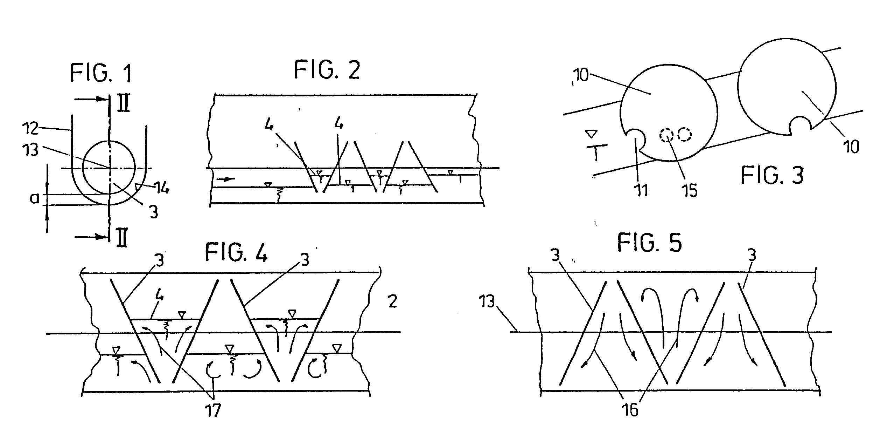

Bei der Ausbildung nach Fig. 1 sind Taumelscheiben 3 in einer Förderrinne bzw. einem Becken 12 enthalten, wobei die Rotationsachse der Taumelscheiben 3 mit 13 bezeichnet ist. Die Rinne kann hiebei geringfügig zur Horizontalen geneigt sein und parallel zum Boden 14 der Rinne 12 kann die Rotationsachse 13 der Taumelscheiben 3 verlaufen. In diesem Falle wird das flüssige Medium durch die Einwirkung der Schwerkraft in Richtung der Rotationsachse der Taumelscheiben 3 gefördert.

Es ergibt sich bei entsprechendem Abstand a zwischen der Unterkante der Taumelscheiben 3 und dem Grund 14 der Rinne ein Drosselquerschnitt zwischen benachbarten Bereichen, in welchen die Taumelscheiben zueinander entgegengesetzt, und wie aus Fig. 2 ersichtlich in zumindest einer Axialebene entgegengesetzt gleich, geneigt sind, wodurch sich eine peristaltische Bewegung des Flüssigkeitsspiegels 4, wie in Fig. 2 dargestellt, ergibt.

Dabei sind Trennwände 10 in Fig. 3 perspektivisch dargestellt. Die Trennwände 10 können an ihrem Umfang Ausnehmungen 11 aufweisen, welche beispielsweise in Längsrichtung der Rotationsachse 13 bzw. der Welle 2 in Umfangsrichtung versetzt angeordnet sind. Zusätzlich oder alternativ können die in Fig. 3 strichliert angedeuteten von Bohrungen gebildeten Durchbrechungen 15 in den Trennwänden 10 vorgesehen sein.

Wie in Fig. 4 und 5 veranschaulicht, ergibt sich durch die Drehung der Taumelscheiben 3 neben einem wechselnden Anheben und Absenken des Flüssigkeitsspiegels 4 in der Seitenansicht nach Fig. 4 auch eine deutliche Querströmung entsprechend den Pfeilen 16 in Fig. 5. Durch das Anheben und Absenken des Flüssigkeitsspiegels 4 in benachbarten Abschnitten ergibt sich jeweils eine zum Flüssigkeitsspiegel 4 gerichtete Strömung entsprechend den Pfeilen 17. Ebenso wie die aus Fig. 5 ersichtliche Querströmung erfolgt bei Umdrehung der Taumelscheiben gemeinsam mit der Welle 2 eine kontinuierliche Bewegungsumkehr dieser Strömungsrichtungen in Höhenrichtung und quer zur Strömungsrichtung bzw. zur Längsachse 13 der Welle für die Taumelscheiben 3.

Als Rotationsgeschwindigkeit für die Welle 2 haben sich Geschwindigkeiten im Bereich von 5 bis 200 min$^{-1}$, insbesondere 60 bis 100 min$^{-1}$, als besonders vorteilhaft erwiesen.

Bei der Verwendung der Einrichtung im Zuge der Flockung von Feststoffen wird die mechanische Belastung so gering gehalten, daß eine Beeinträchtigung der Flockenbildung bzw. eine Zerstörung der Flocken nicht beobachtet werden kann. Insbesondere im Falle der Methangärung bzw. Faulung, bei welcher die biologisch ablaufenden Prozesse auf die Symbiose von jeweils zwei Bakterien zurückgeführt werden können, hat es sich gezeigt, daß nur geringste mechanische Belastung zulässig ist, um diese Symbiose nicht zu stören. Mit der erfindungsgemäßen Einrichtung läßt sich die Mischung bei der Faulung verbessern, ohne die Methanbildung zu beeinträchtigen. Bei höherer mechanischer Belastung wurde in der Vergangenheit immer wieder beobachtet, daß die Methanbildung nicht mehr zustande kommt, da die symbiotisch zusammenwirkenden Bakterien offensichtlich durch die übermäßige mechanische Belastung nicht mehr zusammenwirken konnten und auseinander gerissen wurden.

Durch die Beeinflussung und regelmäßige Umkehr der Strömungsrichtung läßt sich eine Entgasung wesentlich beschleunigen, da ein hoher Grenzflächenkontakt sichergestellt wird.

**Patentansprüche**

1. Einrichtung zum kontinuierlichen Ausdampfen bzw. Ausgasen von Flüssigkeiten, welche zur Schaumbildung neigen, insbesondere von Suspensionen oder in biologischer Umsetzung befindlichen Substraten, bei welcher ein Rotor um eine im wesentlichen horizontale Achse rotierbar gelagert ist, mit dem Rotor in den Flüssigkeitsspiegel (4) eines offenen Beckens (12) eintauchende Taumelscheiben (3) drehfest verbunden sind, die Neigung der Taumelscheiben (3) in Richtung der Drehachse in wenigstens einem Axialschnitt abwechselnd größer und kleiner als 90° zur Drehachse ist, und der Abstand des Umfanges der Taumelscheiben (3) vom Boden des Beckens (12) so gewählt ist, daß ein Drosselquerschnitt zwischen den Taumelscheiben und dem Boden des Beckens verbleibt.

2. Einrichtung nach Anspruch 1, dadurch gekennzeichnet, daß in Achsrichtung der Welle (2) abwechselnd entgegengesetzt zueinander geneigte Taumelscheiben (3) angeordnet sind, deren Neigung in einer gemeinsamen Axialebene entgegengesetzt gleich ist.

3. Einrichtung nach Anspruch 1 oder 2, dadurch gekennzeichnet, daß die Flüssigkeit durch das Becken (12) in Achsrichtung der Drehachse (2) zu strömender Bewegung unter Verwendung einer Pumpe antreibbar ist.

4. Einrichtung nach Anspruch 1, 2 oder 3, dadurch gekennzeichnet, daß das Becken in Achsrichtung der Drehachse (2) durch wenigstens eine Trennwand (10) unterteilt ist, wobei die Ebene der Trennwände (10) von der Drehachse (2) durchsetzt ist, daß der Abstand benachbarter Trennwände (10) größer ist als die Normalprojektion auf die Achse dazwischenliegender benachbarter drehbarer Scheiben (3) und daß die Trennwände (10) unterhalb des Flüssigkeitsspiegels (4), vorzugsweise nahe dem Grund (7) des Beckens, Durchbrechungen (11), insbesondere Drosselquerschnitte, aufweisen.

5. Einrichtung nach einem der Ansprüche 1 bis 4, dadurch gekennzeichnet, daß die Scheiben (3) im wesentlichen kreisförmig und vorzugsweise elliptisch ausgebildet sind.

6. Einrichtung nach Anspruch 4 oder 5, dadurch gekennzeichnet, daß das Becken (12) über Schleusen, Ventile oder Drosseln mit dem Zulauf und dem Ablauf der flüssigen Phase verbunden ist.

7. Einrichtung nach einem der Ansprüche 4 bis 6, dadurch gekennzeichnet, daß die durch Trennwände (10) abgeteilten Teilbereiche des Beckens (12) gesonderte Anschlüsse für Flüssigkeitszufuhr und/oder -abfuhr aufweisen.

**Revendications**

1. Agencement d'élimination continue de vapeurs ou de gaz contenus dans des liquides tendant à former des mousses, notamment de suspensions ou de substrats subissant une transformation biologique, installation dans lequel, un rotor est monté à rotation autour d'un axe sensiblement horizontal, des disques en nutation (3) étant fixés en rotation sur le rotor et plongeant sous le niveau de liquide (4) d'un bassin ouvert (12), l'inclinaison des disques en nutation (3) en direction de l'axe de rotation étant dans au moins un plan de coupe axial, alternativement supérieure et inférieure à 90° par rapport à l'axe de rotation, et la distance entre la périphérie des disques en nutation (3) et le fond du bassin (12) étant choisi de manière à laisser une section d'étranglement entre les disques en nutation et le fond du bassin.

2. Agencement selon la revendication 1, caractérisé en ce que dans la direction axiale de l'arbre (2), sont agencés des disques en nutation (3), inclinés les uns par rapport aux autres selon des directions alternativement opposées, et dont les inclinaisons dans un plan axial commun sont égales et opposées.

3. Agencement selon la revendication 1 ou 2, caractérisé en ce que le liquide peut être entraîné, au moyen d'une pompe, en un mouvement d'écoulement au travers du bassin (12), dans la direction axiale de l'axe de rotation (2).

4. Agencement selon la revendication 1, 2 ou 3, caractérisé en ce que le bassin est subdivisé en plusieurs parties, en direction axiale de l'axe de rotation (2), par au moins une cloison de séparation (10), le plan des cloisons (10) étant traversé par l'axe de rotation (2), en ce que la distance entre cloisons voisines (10) est plus grande que la projection normale sur l'axe des disques rotatifs voisins (3) situés entre les cloisons, et en ce que les cloisons de séparation (10) présentent, en-dessous du niveau de liquide (4), de préférence à proximité du fond (7) du bassin, des ouvertures de passage (11), notamment des sections d'étranglement.

5. Agencement selon l'une des revendications 1 à 4, caractérisé en ce que les disques (3) présentent une forme sensiblement circulaire, et de préférence elliptique.

6. Agencement selon la revendication 4 ou 5, caractérisé en ce que le bassin (12) est relié, au moyen de sas, de vannes ou d'étranglements, l'amenée et à l'évacuation de la phase liquide.

7. Agencement selon l'une des revendications 4 à 6, caractérisé en ce que les parties du bassin (12), séparées par les cloisons de séparation (10), comportent des raccords individuels pour l'amenée et ou l'évacuation du liquide.

**Claims**

1. Device for the continuous stripping off of vapours or gases from liquids which tend to form foam, in particular of suspensions or substrates undergoing a biological conversion, in which a rotor is mounted rotatably about an essentially horizontal axis, swash plates (3), dipping into the liquid level (4) of an open tank (12), are non-rotatably connected to the rotor, the inclination of the swash plates (3) in the direction of the axis of rotation, in at least one axial cross-section, is alternately greater and less than 90° to the axis of rotation, and the distance of the circumference of the swash plates (3) from the bottom of the tank (12) is selected such that a restricted cross-section remains between the swash plates and the bottom of the tank.

2. Device according to Claim 1, characterized in that, in the axial direction of the shaft (2), inclined swash plates (3) are arranged alternately opposed to one another and whose inclination in a common axial plane is opposed and equal.

3. Device according to Claim 1 or 2, characterized in that the liquid can be driven through the tank (12) in the axial direction of the axis of rotation (2) to create a flowing movement with the use of a pump.

4. Device according to Claim 1, 2 or 3, characterized in that the tank, in the axial direction of the axis of rotation (2), is divided by at least one partition wall (10), the plane of the partition walls (10) being pierced by the axis of rotation (2), in that the distance between adjacent partition walls (10) is greater than the normal projection on to the axis of intermediate adjacent rotatable plates (3), and in that the partition walls (10) beneath the liquid level (4), preferably near to the base (7) of the tank, have openings (11), in particular restricted cross-sections.

5. Device according to one of Claims 1 to 4, characterized in that the plates (3) are designed so as to be essentially circular and preferably elliptical.

6. Device according to Claim 4 or 5, characterized in that the tank (12) is connected to the inlet and to the outlet for the liquid phase by sluices, valves or restrictions.

7. Device according to one of Claims 4 to 6, characterized in that the partial regions of the tank (12) which are divisioned off by partition walls (10) have separate connections for the supply and removal of liquid.

Fig. 1

Fig. 2

Fig. 3

Fig. 4

Fig. 5